# EUROPEAN PATENT SPECIFICATION

(11) **EP 3 578 790 B1**
(45) Date of publication and mention of the grant of the patent: **01.12.2021**
(21) Application number: 19179175.5
(22) Date of filing: 07.06.2019
(51) Int. Cl.: F02K 1/72

(54) **CASCADE ASSEMBLY FOR A JET ENGINE THRUST REVERSER**
KASKADENANORDNUNG FÜR EINEN SCHUBUMKEHRER EINES STRAHLTRIEBWERKS
ENSEMBLE EN CASCADE POUR UN INVERSEUR DE POUSSÉE DE TURBORÉACTEUR

(30) Priority: 08.06.2018 US 201816003842
(43) Date of publication of application: 11.12.2019
(73) Proprietor: The Boeing Company, Chicago, IL 60606-1596 (US)
(72) Inventor: CHUCK, Chen, CHICAGO, IL Illinois 60606-1596 (US); OLANIYAN, Tunde Abiodun, CHICAGO, IL Illinois 60606-1596 (US); VANDEMARK, Zachariah B., CHICAGO, IL Illinois 60606-1596 (US); HARPAL, Naimishkumar B., CHICAGO, IL Illinois 60606-1596 (US); BARENE, David J., CHICAGO, IL Illinois 60606-1596 (US)
(74) Representative: Bartelds, Erik

(56) References cited:
- EP-A1- 2 837 810
- US-A- 3 981 451

## Description

### 1. Field:

The present disclosure relates generally to aircraft and, more specifically, to aircraft having jet engines. Yet more specifically, the present disclosure relates to a cascade assembly for a jet engine thrust reverser and methods for forming the cascade assembly.

### 2. Background:

Airplanes with jet engines are often equipped with thrust reversers that increase drag on the airplane during landings, thereby reducing the speed of the aircraft. A thrust reverser increases drag by effectively reversing the flow of exhaust gases through the jet engine. In one type of thrust reverse, referred to as a cascade-type, a transcowl on the jet engine nacelle translates rearwardly to expose a cascade formed by multiple open grid panels. Closing of a blocker door causes a bypass portion of the airflow through the engine to be diverted through a series of circumferentially arranged cascade vanes in the grid panels which are oriented to redirect the airflow forwardly and thereby produce reverse thrust.

The fabrication of cascade grid panels is time consuming, labor intensive, and therefore expensive. Current cascade grid panels are fabricated using fiber reinforced thermoset resins which require many processing steps and specialized equipment. For example, use of thermosets require thawing of prepreg, pre-curing of strongbacks, hand layup of the individual vanes, compression molding to co-cure the strongbacks to the vanes, and post curing.

Therefore, it would be desirable to have a method and apparatus that take into account at least some of the issues discussed above, as well as other possible issues. For example, it would be desirable to create a cascade for a jet engine thrust reverser that is simple in construction and is less expensive to produce. It would also be desirable to have a low cost method of fabricating the cascade that reduces touch labor and requires fewer processing steps as well as less processing equipment.

EP 2837810 A1 discloses a thrust reverser unit (TRU) for a gas turbine engine that has first and second cascade elements. In a stowed configuration, both the first and second cascade elements, and the operating mechanism, are located inside the nacelle, meaning that the TRU has no detrimental impact on the flow through the bypass duct. In the deployed configuration, the first cascade element extends across the bypass duct. The first cascade element has flow passages that allow the flow to pass through, redirecting the flow towards the second cascade element. The second cascade element further turns the flow so as to provide decelerating reverse thrust.

### SUMMARY

An illustrative example of the present disclosure provides a cascade assembly for a jet engine thrust reverser as defined in independent claim 1. Embodiments of the cascade assembly are defined in dependent claims 2-9.

Another illustrative example of the present disclosure provides a method as defined in independent claim 10. Embodiments of this method form the subject matter of dependent claims 11-15.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of a block diagram of a manufacturing environment in which a cascade assembly for a jet engine thrust reverser is manufactured in accordance with an illustrative example;
**Figure 2** is an illustration of a side elevational view of an airplane jet engine, a transcowl having shifted rearwardly to expose a cascade assembly for a jet engine thrust reverser in accordance with an illustrative example;
**Figure 3** is an illustration of a perspective view of the aft end of an airplane jet engine, a transcowl having shifted rearwardly to expose a cascade assembly for a jet engine thrust reverser in accordance with an illustrative example;
**Figure 4** is an illustration of a longitudinal sectional view of a portion of an airplane jet engine, illustrating airflow through the cascade assembly for the thrust reverser in accordance with an illustrative example;
**Figure 5** is an illustration of a sectional view of a cascade assembly in an airplane jet engine in accordance with an illustrative example;
**Figure 6** is an illustration of an exploded view of a cascade assembly in accordance with an illustrative example;
**Figure 7** is an illustration of a front cross-sectional view of a cascade assembly in accordance with an illustrative example;
**Figure 8** is an illustration of a side cross-sectional view of a cascade assembly in accordance with an illustrative example;
**Figure 9** is an illustration of a side cross-sectional view of an inflow compression molding tool and an inflow cascade in accordance with an illustrative example;
**Figure 10** is an illustration of a side cross-sectional view of an outflow compression molding tool and an outflow cascade in accordance with an illustrative example;
**Figure 11** is an illustration of an isometric view of an inflow compression molding tool in accordance with an illustrative example;
**Figure 12** is an illustration of a flowchart of a method for using a cascade assembly in accordance with an illustrative example;
**Figure 13** is an illustration of a flowchart of a method for forming a cascade assembly in accordance with an illustrative example;
**Figure 14** is an illustration of an aircraft manufacturing and service method in the form of a block diagram in accordance with an illustrative example; and
**Figure 15** is an illustration of an aircraft in the form of a block diagram in which an illustrative example may be implemented.

### DETAILED DESCRIPTION

The illustrative examples recognize and take into account one or more different considerations. For example, the illustrative examples recognize and take into account that it would be desirable to compression mold thermoplastic cascades. The illustrative examples recognize and take into account that compression molding traditional cascade designs may use mold designs that are undesirably complicated with many parts. The illustrative examples recognize and take into account that one way of compression molding thermoplastic material into a conventional one piece cascade would utilize molds with hundreds of parts. The illustrative examples recognize and take into account that using a mold with hundreds of parts uses an undesirable amount of labor to organize and assemble the mold parts. The illustrative examples recognize and take into account that the additional time and components for compression molding traditional cascade designs undesirably increases the cost of the compression molding process.

The illustrative examples recognize and take into account that in conventional cascades the vanes, which provide the forward turning, and the strongbacks, which provide the side turning, have both curved and straight sections. The illustrative examples recognize and take into account that the curved sections are on the inner side and the straight sections are on the outer side. The illustrative examples recognize and take into account that the geometry of traditional cascades makes removing a simple mold insert from the passages created by the vanes and strongbacks of the cascade impossible or undesirably difficult.

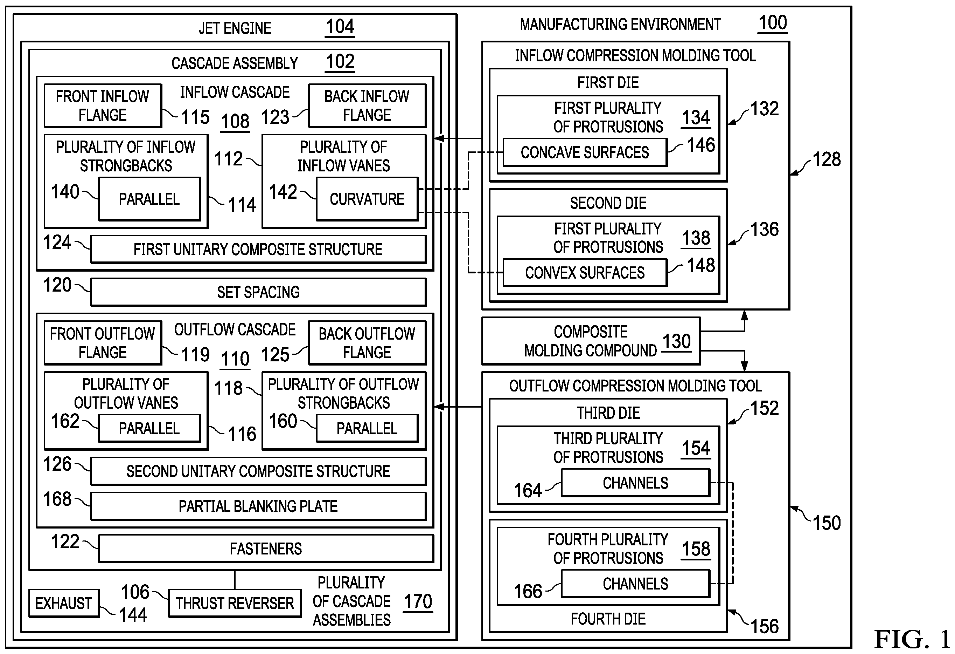

Turning now to **Figure 1****,** an illustration of a block diagram of a manufacturing environment in which a cascade assembly for a jet engine thrust reverser is manufactured is depicted in accordance with an illustrative example. Manufacturing environment **100** is an environment in which cascade assembly **102** for jet engine **104** thrust reverser **106** is manufactured. Cascade assembly **102** comprises inflow cascade **108** and outflow cascade **110.** Inflow cascade **108** has plurality of inflow vanes **112,** plurality of inflow strongbacks **114,** and front inflow flange **115.** Outflow cascade **110** has plurality of outflow vanes **116,** plurality of outflow strongbacks **118,** and front outflow flange **119.** In some illustrative examples, each of plurality of outflow vanes **116** are parallel to each other. Each of plurality of outflow strongbacks **118** are parallel to each other.

In some illustrative examples, plurality of inflow vanes **112** and plurality of outflow vanes **116** may be treated as a set of vanes of cascade assembly **102.** In these illustrative examples, the set of vanes has a curved section. The division of the set of vanes into plurality of inflow vanes **112** and plurality of outflow vanes **116** is positioned to reduce complexity in mold design. In some illustrative examples, the division of the set of vanes into plurality of inflow vanes **112** and plurality of outflow vanes **116** is to form a straight section and a curved section.

In some illustrative examples, plurality of inflow strongbacks **114** and plurality of outflow strongbacks **118** may be treated as a set of strongbacks of cascade assembly **102.** In these illustrative examples, the set of strongbacks has a curved section. In some illustrative examples, the division of the set of strongbacks into plurality of inflow strongbacks **114** and plurality of outflow strongbacks **118** is positioned to reduce complexity in mold design. In some illustrative examples, the division of the set of strongbacks into plurality of inflow strongbacks **114** and plurality of outflow strongbacks **118** is to form a straight section and a curved section.

In some illustrative examples, the set of vanes and the set of strongbacks have common curve locations. In these illustrative examples, the location of the split between the curved and straight sections is common for the vanes and the strongbacks and will reduce complexity in mold design.

Inflow cascade **108** and outflow cascade **110** are separated by set spacing **120.** In some illustrative examples, set spacing **120** is up to 25 mm (one inch). Set spacing **120** within cascade assembly **102** is maintained using any desirable structures.

In some illustrative examples, set spacing **120** reduces fatigue in cascade assembly **102.** In some illustrative examples, fatigue in inflow cascade **108** and outflow cascade **110** is lower when set spacing **120** is present.

In some illustrative examples, set spacing **120** between inflow cascade **108** and outflow cascade **110** is maintained by fasteners **122** joining inflow cascade **108** and outflow cascade **110.** In some illustrative examples, fasteners **122** take the form of bolts extending through inflow cascade **108** and outflow cascade **110.**

Fasteners **122** join inflow cascade **108** and outflow cascade **110** in any desirable fashion. In some illustrative examples, fasteners **122** extend through front inflow flange **115** and front outflow flange **119.** In some illustrative examples, front inflow flange **115** and front outflow flange **119** are described as overlapping flanges. In some illustrative examples, front inflow flange **115** and front outflow flange **119** are each substantially flat and substantially parallel to each other.

In some illustrative examples, joining inflow cascade **108** and outflow cascade **110** comprises overlapping respective flanges of inflow cascade **108** and outflow cascade **110.** In some illustrative examples, joining inflow cascade **108** and outflow cascade **110** comprises overlapping front inflow flange **115** of inflow cascade **108** and front outflow flange **119** of outflow cascade **110.** After overlapping front inflow flange **115** of inflow cascade **108** and front outflow flange **119** of outflow cascade **110,** fasteners **122** are sent through front inflow flange **115** and front outflow flange **119.**

In some illustrative examples, inflow cascade **108** has back inflow flange **123.** In some illustrative examples, outflow cascade **110** has back outflow flange **125.** In some illustrative examples, cascade assembly **102** comprises additional fasteners (not depicted) joining inflow cascade **108** and outflow cascade **110** by extending through back inflow flange **123** and back outflow flange **125.** In some illustrative examples, back inflow flange **123** and back outflow flange **125** are perpendicular to front inflow flange **115** and front outflow flange **119.**

In some illustrative examples, joining inflow cascade **108** and outflow cascade **110** comprises overlapping respective flanges of inflow cascade **108** and outflow cascade **110.** In some illustrative examples, joining inflow cascade **108** and outflow cascade **110** comprises overlapping back inflow flange **123** of inflow cascade **108** and back outflow flange **125** of outflow cascade **110.** After overlapping back inflow flange **123** of inflow cascade **108** and back outflow flange **125** of outflow cascade **110,** fasteners are sent through back inflow flange **123** and back outflow flange **125.**

In some illustrative examples, inflow cascade **108** is first unitary composite structure **124** and outflow cascade **110** is second unitary composite structure **126.** In some illustrative examples, first unitary composite structure **124** is formed using inflow compression molding tool **128.**

To form first unitary composite structure **124,** composite molding compound **130** is introduced into inflow compression molding tool **128.** Inflow compression molding tool **128** has first die **132** with first plurality of protrusions **134** and second die **136** with second plurality of protrusions **138.** Composite molding compound **130** is compressed between first die **132** and second die **136** to form inflow cascade **108** with plurality of inflow strongbacks **114** and plurality of inflow vanes **112.**

Plurality of inflow strongbacks **114** are parallel **140** to each other to allow for removal of first plurality of protrusions **134** and second plurality of protrusions **138** from inflow cascade **108.** Plurality of inflow vanes **112** have curvature **142** to direct exhaust **144** in operation. Curvature **142** is designed to allow for removal of first plurality of protrusions **134** and second plurality of protrusions **138** from inflow cascade **108.**

Inflow cascade **108** is designed to be formed using only two dies: first die **132** and second die **136.** Curvature **142** of plurality of inflow vanes **112** is formed using concave surfaces **146** of first plurality of protrusions **134** and convex surfaces **148** of second plurality of protrusions **138.** Curvature **142** of a respective inflow vane of plurality of inflow vanes **112** is formed between a respective concave surface of concave surfaces **146** and a respective convex surface of convex surfaces **148.**

In some illustrative examples, second unitary composite structure **126** is formed using outflow compression molding tool **150.** To form second unitary composite structure **126,** composite molding compound **130** is introduced into outflow compression molding tool **150.** Outflow compression molding tool **150** has third die **152** with third plurality of protrusions **154** and fourth die **156** with fourth plurality of protrusions **158.** Composite molding compound **130** is compressed between third die **152** and fourth die **156** to form outflow cascade **110** with plurality of outflow strongbacks **118** and plurality of outflow vanes **116.**

Plurality of outflow strongbacks **118** are parallel **160** to each other to allow for removal of third plurality of protrusions **154** and fourth plurality of protrusions **158** from outflow cascade **110.** In some illustrative examples, plurality of outflow strongbacks **118** are angled to provide side turning. Plurality of outflow vanes **116** are parallel **162** to allow for removal of third plurality of protrusions **154** and fourth plurality of protrusions **158** from outflow cascade **110.** In some illustrative examples, plurality of outflow vanes **116** are angled to provide forward turning.

Outflow cascade **110** is designed to be formed using only two dies: third die **152** and fourth die **156.**

To form plurality of outflow vanes **116,** composite molding compound **130** is formed using channels **164** between third plurality of protrusions **154** and channels **166** between fourth plurality of protrusions **158.** For example, each outflow vane of plurality of outflow vanes **116** is formed by a channel of channels **164** and a channel of channels **166.**

In some illustrative examples, outflow cascade **110** of cascade assembly **102** includes partial blanking plate **168.** Partial blanking plate **168** is a portion of outflow cascade **110** without plurality of outflow vanes **116.**

In some illustrative examples, it is desirable to partially block a flow through cascade assembly **102.** For example, it may be desirable to partially block a flow through cascade assembly **102** to avoid aerodynamic impingement with surrounding structural elements. In some illustrative examples, some of the last vane flow packages at the aft end of cascade assembly **102** are blanked by inserting a plate or a series of plates.

Cascade assembly **102** is one of plurality of cascade assemblies **170** for jet engine **104.** In some illustrative examples, each of plurality of cascade assemblies **170** is formed using compression molding. In some illustrative examples, at least one of plurality of cascade assemblies **170** other than cascade assembly **102** is formed using compression molding.

As used herein, the phrase "at least one of," when used with a list of items, means different combinations of one or more of the listed items may be used, and only one of each item in the list may be needed. In other words, "at least one of' means any combination of items and number of items may be used from the list, but not all of the items in the list are required. The item may be a particular object, a thing, or a category.

This example also may include item A, item B, and item C, or item B and item C. Of course, any combination of these items may be present. In other examples, "at least one of' may be, for example, without limitation, two of item A, one of item B, and ten of item C; four of item B and seven of item C; or other suitable combinations.

Each cascade assembly of plurality of cascade assemblies **170** has a respective inflow cascade and a respective outflow cascade. In some illustrative examples, each inflow cascade of plurality of cascade assemblies **170** has a same design as inflow cascade **108** of cascade assembly **102.** In these illustrative examples, each cascade assembly of plurality of cascade assemblies **170** has a same inflow cascade design.

In some illustrative examples, each of inflow cascades of plurality of cascade assemblies **170** is formed using inflow compression molding tool **128.** In some illustrative examples, each of inflow cascades of plurality of cascade assemblies **170** is formed using a different inflow compression molding tool depending on the angles of the respective inflow strong backs and the curvature of the respective inflow vanes of each inflow cascade. In some illustrative examples, each of outflow cascades of plurality of cascade assemblies **170** is formed using a different outflow compression molding tool depending on the angles of the respective outflow strong backs and the angles of the respective outflow vanes of each outflow cascade.

The illustration of manufacturing environment **100** in **Figure 1** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, although not depicted in **Figure 1****,** mechanical spacers may be placed between inflow cascade **108** and outflow cascade **110** to create and maintain set spacing **120.** As another example, although set spacing **120** is present, in other illustrative examples, not falling under the claimed invention, inflow cascade **108** and outflow cascade **110** are not separated by set spacing **120.** In some illustrative examples, not falling under the claimed invention, inflow cascade **108** is adhered directly to outflow cascade **110.**

Although not depicted in **Figure 1****,** additional fastening mechanisms may be present. As an example, additional fasteners and bosses may be present and spaced throughout cascade assembly **102.** Although not depicted in **Figure 1****,** plates may be attached to sides of both inflow cascade **108** and outflow cascade **110.** In some examples, plates may be attached inside vane passageways of inflow cascade **108** and outflow cascade **110.**

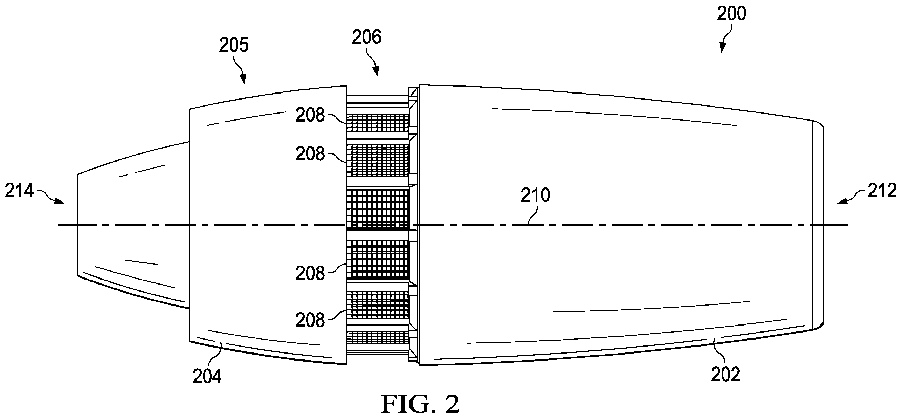

Turning now to **Figure 2****,** an illustration of a side elevational view of an airplane jet engine, a transcowl having shifted rearwardly to expose a cascade assembly for a jet engine thrust reverser is depicted in accordance with an illustrative example. Jet engine **200** is a physical implementation of jet engine **104** of **Figure 1****.** Jet engine **200** includes engine nacelle **202** and transcowl **204** that translates rearwardly to open position **205** to expose thrust reverser **206.** Thrust reverser **206** includes plurality of cascade assemblies **208.** Plurality of cascade assemblies **208** is a physical implementation of plurality of cascade assemblies **170** of **Figure 1****.** Plurality of cascade assemblies **208** is a plurality of circumferentially arranged, thrust reversing cascade grid panels, sometimes referred to as cascade baskets.

Axis **210** runs from inlet **212** of jet engine **200** to exhaust nozzle **214** of jet engine **200.** When a cascade assembly of plurality of cascade assemblies **208** has an inflow cascade and an outflow cascade, the inflow cascade is closer than the outflow cascade to axis **210** running through jet engine **200.**

In some illustrative examples, each of plurality of cascade assemblies **208** is different. In some illustrative examples, at least two of plurality of cascade assemblies **208** are the same design. In some illustrative examples, components of plurality of cascade assemblies **208** are the same. For example, each cascade assembly of the plurality of cascade assemblies **208** may have a same inflow cascade design.

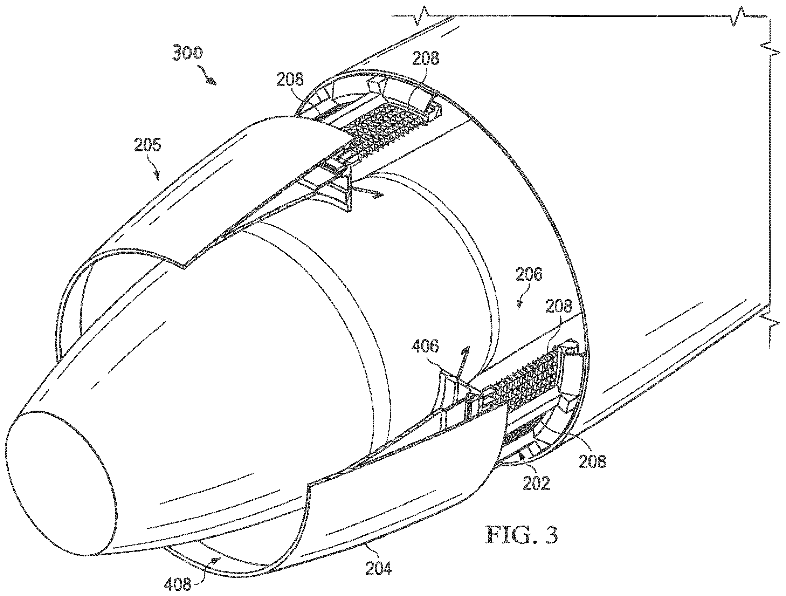

Turning now to **Figure 3****,** an illustration of a perspective view of the aft end of an airplane jet engine, a transcowl having shifted rearwardly to expose a cascade assembly for a jet engine thrust reverser is depicted in accordance with an illustrative example.

In view **300,** transcowl **204** is in open position **205** exposing plurality of cascade assemblies **208.** In view **300,** portions of plurality of cascade assemblies **208** and portions of jet engine **200** have been cut away.

As depicted, each of plurality of cascade assemblies **208** comprises a respective inflow cascade and a respective outflow cascade. For example, cascade assembly **302** of plurality of cascade assemblies **208** may be a physical implementation of cascade assembly **102** of **Figure 1****.** Cascade assembly **302** has inflow cascade **304** and outflow cascade **306.**

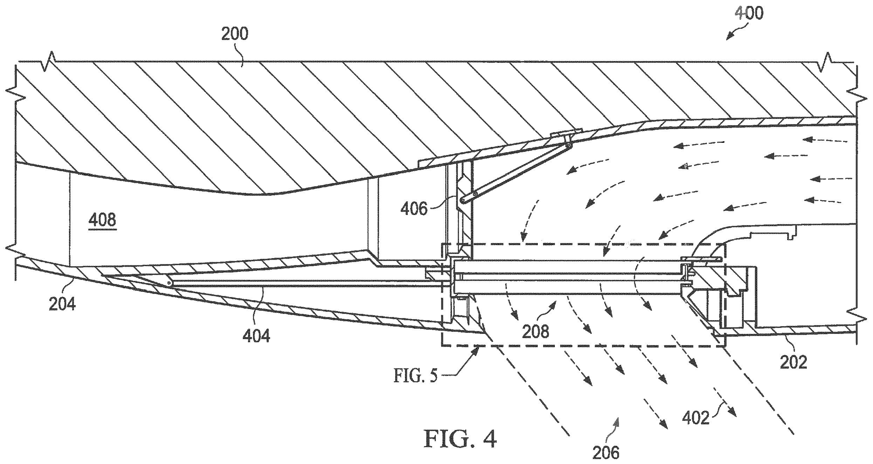

Turning now to **Figure 4****,** an illustration of a longitudinal sectional view of a portion of an airplane jet engine, illustrating airflow through the cascade assembly for the thrust reverser is depicted in accordance with an illustrative example. View **400** is a cross-sectional view of jet engine **200** with arrows **402** added to depict exhaust.

During normal flying operations, transcowl **204** is in a closed, forward position, joining transcowl **204** with engine nacelle **202,** and thereby covering plurality of cascade assemblies **208.** During landing, transcowl **204** is moved from its closed position (not depicted) to open position **205** by means of actuator rods **404.** In some illustrative examples, open position **205** may also be referred to as a rearwardly extended position.

Opening transcowl **204** exposes plurality of cascade assemblies **208** to the surrounding environment. With transcowl **204** having been shifted to open position **205,** thrust reverser **206** is activated by closing circumferentially located blocker doors **406.** Closing the blocker doors **406** prevents the bypass exhaust from flowing in its normal direction out of the nozzle **408,** forcing the exhaust through plurality of cascade assemblies **208,** as shown by the arrows **402.** Each of plurality of cascade assemblies **208** includes vanes (not depicted) that direct the flow of the exhaust forward, and optionally radially outward, producing a reversal in the direction of the exhaust flow. This reversal of the exhaust flow results in a reversal of thrust that assists in slowing down the aircraft.

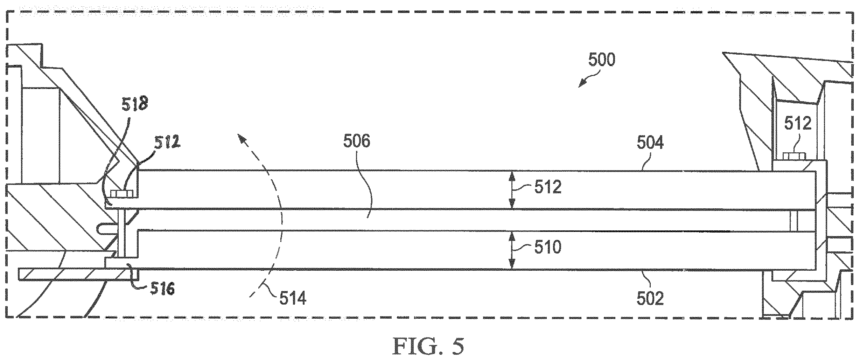

Turning now to **Figure 5****,** an illustration of a sectional view of a cascade assembly in an airplane jet engine is depicted in accordance with an illustrative example. Cascade assembly **500** is one of plurality of cascade assemblies **208** of **Figures 2-4****,** e.g. the cascade assembly **208** in the dashed block identified as "FIG. 5" in **Figure 4****.** Cascade assembly **500** is a physical implementation of cascade assembly **102** of **Figure 1****.** Cascade assembly **500** comprises inflow cascade **502** and outflow cascade **504.** Inflow cascade **502** is a physical implementation of inflow cascade **108** of **Figure 1****.** Outflow cascade **504** is a physical implementation of outflow cascade **110** of **Figure 1****.**

Inflow cascade **502** and outflow cascade **504** are separated by set spacing **506.** Set spacing **506** has any desirable value. As depicted, set spacing **506** is less than thickness **508** of inflow cascade **502.** As depicted, set spacing **506** is less than thickness **510** of outflow cascade **504.** As depicted, set spacing **506** is maintained by fasteners **512** extending through inflow cascade **502** and outflow cascade **504.**

In some illustrative examples, exhaust **514** is a turbulent flow through cascade assembly **500.** In some illustrative examples, set spacing **506** reduces fatigue in cascade assembly **500.** In some illustrative examples, fatigue in inflow cascade **502** and outflow cascade **504** is lower when set spacing **506** is present.

As depicted, exhaust **514** enters inflow cascade **502** and inflow vanes (not depicted) direct exhaust **514** to outflow cascade **504.** Exhaust **514** is directed by outflow vanes (not depicted) such that direction of exhaust **514** is substantially reversed.

As depicted, each of inflow cascade **502** and outflow cascade **504** have a respective mounting flange configured to allow cascade assembly **500** to be mounted to jet engine **104** or jet engine **200.** Inflow cascade **502** has front inflow flange **516.** Outflow cascade **504** has front outflow flange **518.** At least one fastener of fasteners **512** extends through front inflow flange **516** and front outflow flange **518** to secure cascade assembly **500** in jet engine **200.** In some illustrative examples, respective mounting flanges for each of plurality of cascade assemblies **208** allow the plurality of cascade assemblies **208** to be mounted side-by-side in a circumferential arrangement around engine nacelle **202.**

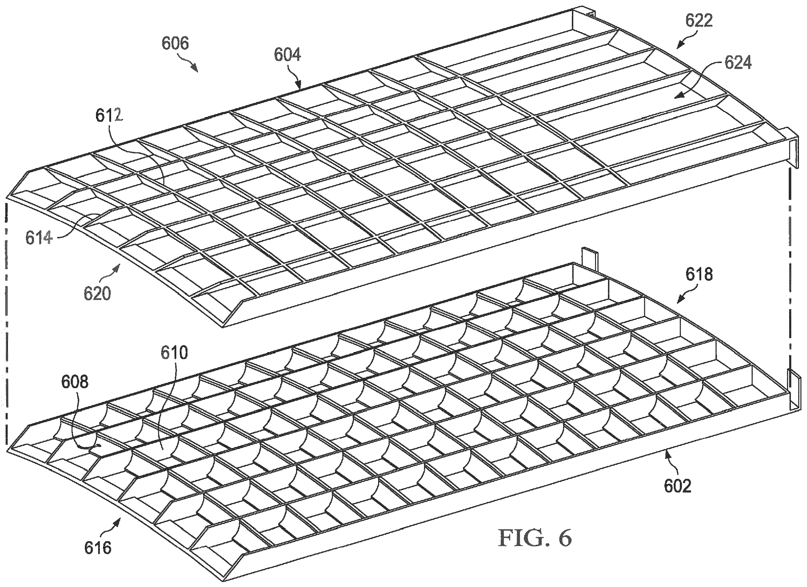

Turning now to **Figure 6****,** an illustration of an exploded view of a cascade assembly is depicted in accordance with an illustrative example. Cascade assembly **600** is a physical implementation of cascade assembly **102** of **Figure** 1. Cascade assembly **600** may be one of plurality of cascade assemblies **208** prior to installation on jet engine **200** of **Figures 2-4****.** In some illustrative examples, cascade assembly **600** is the same as cascade assembly **500** of **Figure 5****.**

Cascade assembly **600** comprises inflow cascade **602** and outflow cascade **604.** Inflow cascade **602** is a physical implementation of inflow cascade **108** of **Figure 1****.** Outflow cascade **604** is a physical implementation of outflow cascade **110** of **Figure 1****.** In some illustrative examples, cascade assembly **600**

In view **606,** plurality of inflow vanes **608** and plurality of inflow strongbacks **610** of inflow cascade **602** are visible. In view **606,** plurality of outflow vanes **612** and plurality of outflow strongbacks **614** of outflow cascade **604** are visible.

By tailoring the design of plurality of inflow vanes **608** and plurality of inflow strongbacks **610,** an inflow compression molding tool having only two opposing dies may be used to form inflow cascade **602.** For example, inflow compression molding tool **128** of **Figure 1** may be used to form inflow cascade **602.**

By tailoring the design of plurality of outflow vanes **612** and plurality of outflow strongbacks **614,** an outflow compression molding tool having only two opposing dies may be used to form outflow cascade **604.** For example, outflow compression molding tool **150** of **Figure 1** may be used to form outflow cascade **604.**

In view **606** inflow cascade **602** has front inflow flange **616** and back inflow flange **618.** As depicted, outflow cascade **604** has front outflow flange **620** and back outflow flange **622.**

In some illustrative examples, joining inflow cascade **602** and outflow cascade **604** comprises overlapping front inflow flange **616** and front outflow flange **620.** In some illustrative examples, joining inflow cascade **602** and outflow cascade **604** comprises overlapping back inflow flange **618** and back outflow flange **622.**

As depicted, outflow cascade **604** also has partial blanking plate **624.** Partial blanking plate **624** is a portion of outflow cascade **604** without plurality of outflow vanes **612.**

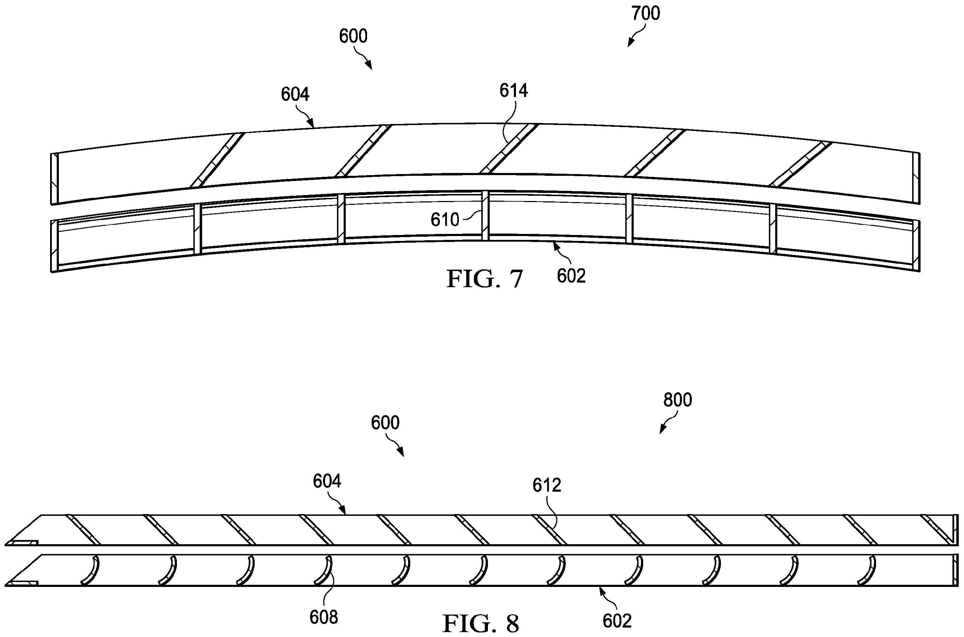

Turning now to **Figure 7****,** an illustration of a front cross-sectional view of a cascade assembly is depicted in accordance with an illustrative example. View **700** is a front cross-sectional view of cascade assembly **600** after joining together components of cascade assembly **600.**

In view **700,** inflow strongbacks **610** and outflow strongbacks **614** are visible. As can be seen, inflow strongbacks **610** are each parallel to each other. By inflow strongbacks **610** each being parallel to each other, removal of tooling is simplified for compression molding processes. As depicted, inflow strongbacks **610** are at a zero degree angle.

As can be seen, outflow strongbacks **614** are each parallel to each other. By outflow strongbacks **614** each being parallel to each other, removal of tooling is simplified for compression molding processes. As depicted, outflow strongbacks **614** are at a 45 degree angle. In other illustrative examples, outflow strongbacks **614** may have any desirable angle in the range of +/- 50 degrees.

Turning now to **Figure 8****,** an illustration of a side cross-sectional view of a cascade assembly is depicted in accordance with an illustrative example. View **800** is a side cross-sectional view of cascade assembly **600** after joining together components of cascade assembly **600.**

In view **800,** plurality of inflow vanes **608** and outflow vanes **612** are visible. As depicted, plurality of inflow vanes **608** are curved. As can be seen, each of plurality of inflow vanes **608** have the same curvature and same orientation. Design of plurality of inflow vanes **608,** simplifies removal of tooling for compression molding processes.

As can be seen, plurality of outflow vanes **612** are each parallel to each other. By plurality of outflow vanes **612** each being parallel to each other, removal of tooling is simplified for compression molding processes. As depicted, plurality of outflow vanes **612** are at a -45 degree angle. In other illustrative examples, plurality of outflow vanes **612** may have any desirable angle in the range of +/- 60 degrees.

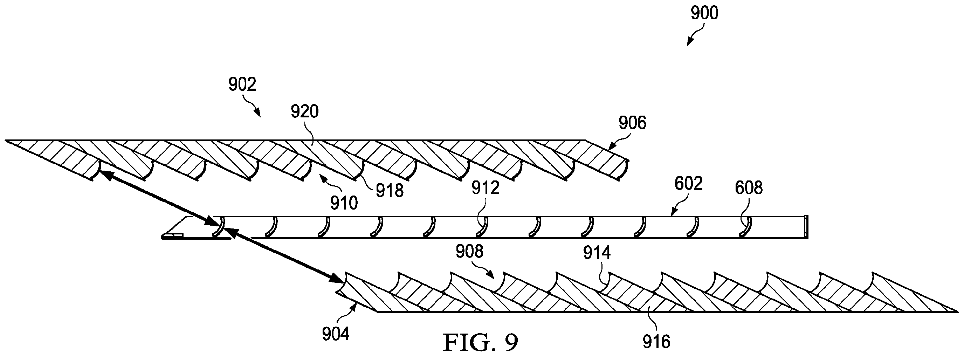

Turning now to **Figure 9****,** an illustration of a side cross-sectional view of an inflow compression molding tool and an inflow cascade is depicted in accordance with an illustrative example. View **900** is a cross-sectional view of inflow compression molding tool **902** as first die **904** and second die **906** move away from inflow cascade **602.** Inflow compression molding tool **902** is a physical implementation of inflow compression molding tool **128** of **Figure 1****.**

First plurality of protrusions **908** and second plurality of protrusions **910** of inflow compression molding tool **902** form plurality of inflow vanes **608** of inflow cascade **602.** As depicted, each inflow vane of plurality of inflow vanes **608** is formed between a surface of a respective protrusion of first plurality of protrusions **908** and a surface of a respective protrusion of second plurality of protrusions **910.** For example, inflow vane **912** is formed by concave surface **914** of protrusion **916** of first plurality of protrusions **908** and convex surface **918** of protrusion **920** of second plurality of protrusions **910.** Each of plurality of inflow vanes **608** is designed such that first plurality of protrusions **908** and second plurality of protrusions **910** may be easily removed in a single removal process.

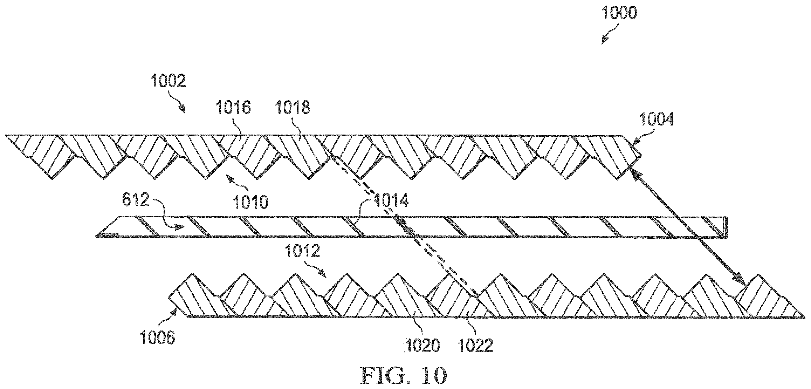

Turning now to **Figure 10****,** an illustration of a side cross-sectional view of an outflow compression molding tool and an outflow cascade is depicted in accordance with an illustrative example. View **1000** is a cross-sectional view of outflow compression molding tool **1002** as third die **1004** and fourth die **1006** move away from outflow cascade **604.** Outflow compression molding tool **1002** is a physical implementation of outflow compression molding tool **150** of **Figure 1****.**

Third plurality of protrusions **1010** and fourth plurality of protrusions **1012** of outflow compression molding tool **1002** form plurality of outflow vanes **612** of outflow cascade **604.** As depicted, each outflow vane of plurality of outflow vanes **612** is formed between two respective protrusions of third plurality of protrusions **1010** and between two respective protrusions of fourth plurality of protrusions **1012.** For example, as indicated by the dashed lines, outflow vane **1014** is formed by a channel between protrusion **1016** and protrusion **1018** of third plurality of protrusions **1010** and by a channel between protrusion **1020** and protrusion **1022** of fourth plurality of protrusions **1012.** These channels between the respective protrusions **1016, 1018** and **1020, 1022** of the third and fourth plurality of protrusions **1010, 1012** are physical implementations of channels **164, 166** of **Figure 1****.**

Each of plurality of outflow vanes **612** of outflow cascade **604** is parallel to each other outflow vane of plurality of outflow vanes **612.** By each of plurality of outflow vanes **612** being parallel, third plurality of protrusions **1010** and fourth plurality of protrusions **1012** may be easily removed in a single removal process.

In this way, in the illustrated embodiments, the inflow vanes are formed between opposing surfaces of corresponding protrusions, while the outflow vanes are formed between sidewalls of protrusions which are mutually offset.

The illustration of cascade assembly **600** and its components in **Figures 6-10** is not meant to imply physical or architectural limitations to the manner in which an illustrative example may be implemented. For example, the angles of plurality of outflow vanes **612** and outflow strongbacks **614** may have any desirable angles and are not limited to those depicted in **Figures 6-8****.**

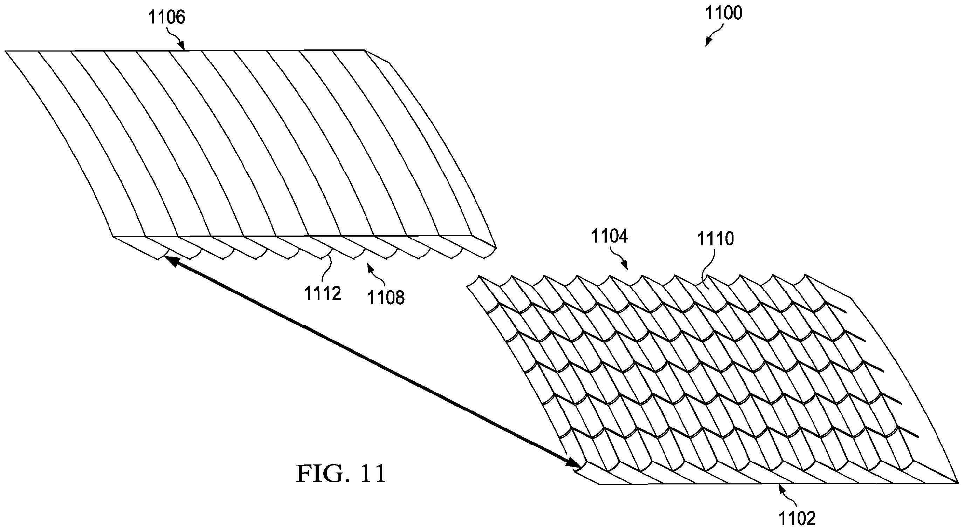

Turning now to **Figure 11****,** an illustration of an isometric view of an inflow compression molding tool is depicted in accordance with an illustrative example. Inflow compression molding tool **1100** may be used to form inflow cascade **108** of **Figure 1****.** Inflow compression molding tool **1100** may be a physical implementation of inflow compression molding tool **128** of **Figure 1****.** Inflow compression molding tool **1100** may be used to form inflow cascades of plurality of cascade assemblies **208** of **Figures 2-4****.** Inflow compression molding tool **1100** may be used to form inflow cascade **602** of **Figures 6-8****.** In some illustrative examples, inflow compression molding tool **1100** is the same as inflow compression molding tool **902** of **Figure 9****.**

Inflow compression molding tool **1100** comprises first die **1102** with first plurality of protrusions **1104** and second die **1106** with second plurality of protrusions **1108.** As depicted, first plurality of protrusions **1104** have concave surfaces **1110.** As depicted, second plurality of protrusions **1108** have convex surfaces **1112.** Composite molding compound (not depicted) formed between concave surfaces **1110** and convex surfaces **1112** creates inflow vanes for an inflow cascade.

Inflow compression molding tool **1100** may be used to form an inflow cascade without any additional internal dies. For example, inflow compression molding tool **1100** may be used to form an inflow cascade without any dissolvable components.

The different components shown in **Figures 2-11** may be combined with components in **Figure 1****,** used with components in **Figure 1****,** or a combination of the two. Additionally, some of the components in **Figures 2-11** may be illustrative examples of how components shown in block form in **Figure 1** may be implemented as physical structures.

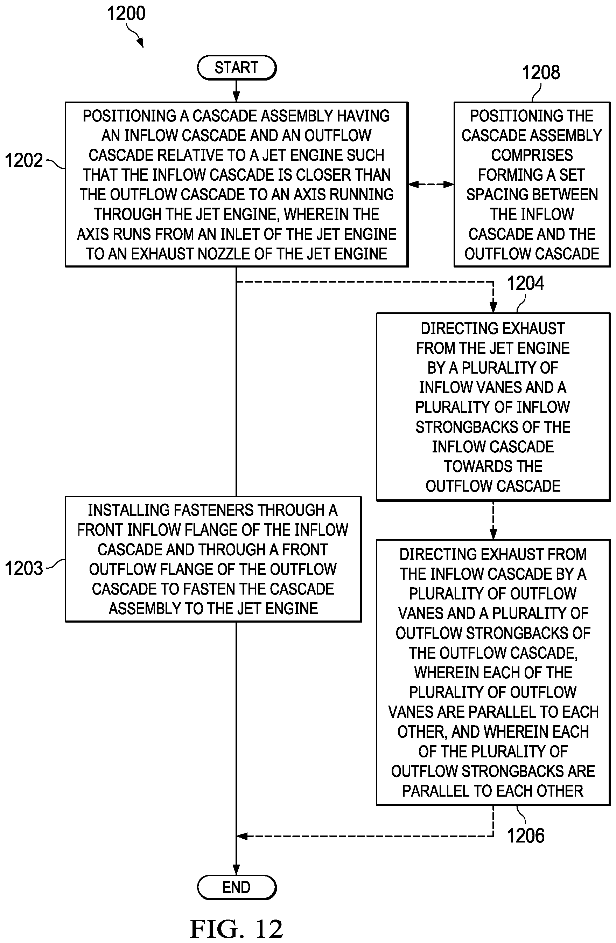

Turning now to **Figure 12****,** an illustration of a flowchart of a method for using a cascade assembly is depicted in accordance with an illustrative example. Method **1200** may be performed using cascade assembly **102** of **Figure 1****.** Method **1200** may be performed to install plurality of cascade assemblies **208** to jet engine **200** of **Figures 2-4****.** Method **1200** may be used to install cascade assembly **500** of **Figure 5****.** Method **1200** may be used to install cascade assembly **600** of **Figures 6-8****.**

Method **1200** positions a cascade assembly having an inflow cascade and an outflow cascade relative to a jet engine such that the inflow cascade is closer than the outflow cascade to an axis running through the jet engine, wherein the axis runs from an inlet of the jet engine to an exhaust nozzle of the jet engine (operation **1202).** Fasteners are installed through a respective front inflow flange of each respective inflow cascade and through a respective front outflow flange of each respective outflow cascade to fasten the respective cascade assembly of the plurality of cascade assemblies to the jet engine (operation **1203).** Afterwards, method **1200** terminates. In some illustrative examples, the inflow cascade is a first unitary composite structure, and the outflow cascade is a second unitary composite structure.

In some illustrative examples, method **1200** directs exhaust from the jet engine via a plurality of inflow vanes and a plurality of inflow strongbacks of the inflow cascade towards the outflow cascade (operation **1204).** In some illustrative examples, method **1200** directs exhaust from the inflow cascade via a plurality of outflow vanes and a plurality of outflow strongbacks of the outflow cascade, wherein each of the plurality of outflow vanes are parallel to each other, and wherein each of the plurality of outflow strongbacks are parallel to each other (operation **1206).**

In some illustrative examples, positioning the cascade assembly comprises forming a set spacing between the inflow cascade and the outflow cascade (operation **1208).** In some illustrative examples, the set spacing is up to 25 mm (one inch).

In some illustrative examples, the cascade assembly is a first cascade assembly of a plurality of cascade assemblies. In some of these illustrative examples, method **1200** further comprises positioning the plurality of cascade assemblies relative to the jet engine, each cascade assembly of the plurality of cascade assemblies having a respective inflow cascade and a respective outflow cascade, wherein each inflow cascade of the plurality of cascade assemblies has a same design as the inflow cascade of the first cascade assembly; and installing fasteners through a respective front inflow flange of each respective inflow cascade and through a respective front outflow flange of each respective outflow cascade to fasten the respective cascade assembly of the plurality of cascade assemblies to the jet engine.

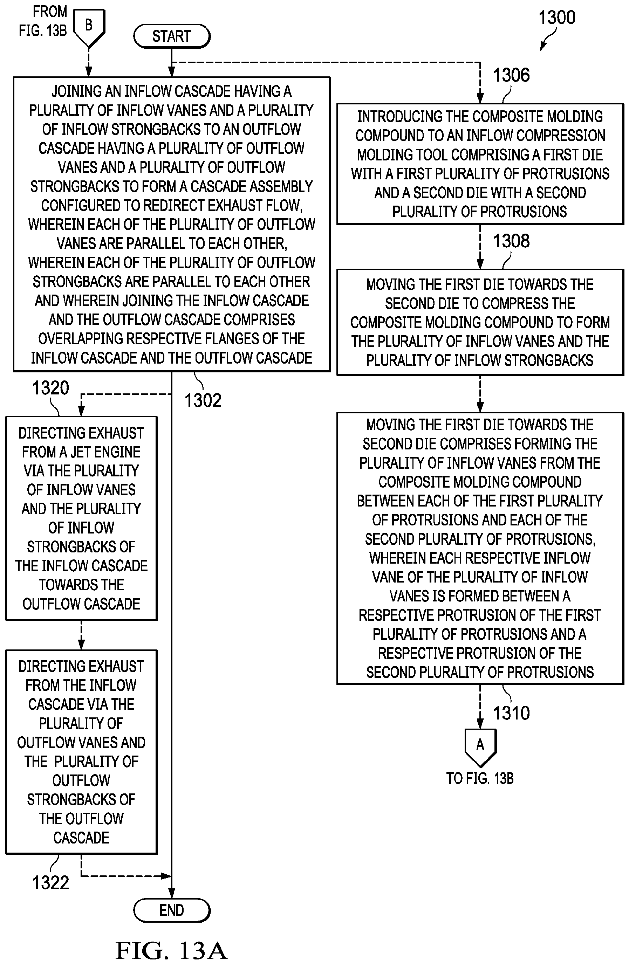

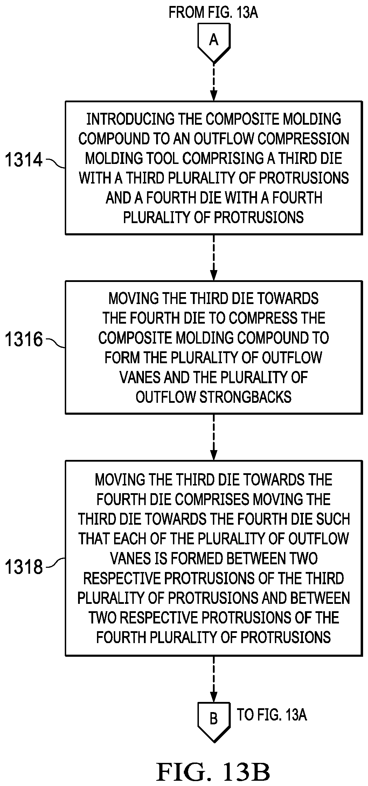

Turning now to **Figure 13****,** an illustration of a flowchart of a method for forming a cascade assembly is depicted in accordance with an illustrative example. Cascade assembly **102** may be formed using method **1300** of **Figure 13****.** Method **1300** may be used to form plurality of cascade assemblies **208** of **Figures 2-4****.** Method **1300** may be used to form cascade assembly **500** of **Figure 5****.** Method **1300** may be used to form cascade assembly **600** as shown assembled in **Figures 7 and 8****.**

Method **1300** joins an inflow cascade having a plurality of inflow vanes and a plurality of inflow strongbacks to an outflow cascade having a plurality of outflow vanes and a plurality of outflow strongbacks to form a cascade assembly configured to redirect exhaust flow, wherein each of the plurality of outflow vanes are parallel to each other, wherein each of the plurality of outflow strongbacks are parallel to each other, and wherein joining the inflow cascade and the outflow cascade comprises overlapping respective flanges of the inflow cascade and the outflow cascade (operation **1302).** Afterwards, method **1300** terminates. In some illustrative examples, joining further comprises installing fasteners through the respective flanges of the inflow cascade and the outflow cascade, wherein the respective flanges comprise a back inflow flange of the inflow cascade and a back outflow flange of the outflow cascade.

In some illustrative examples, method **1300** further comprises compression molding a composite molding compound to form the inflow cascade. In some illustrative examples, compression molding the composite molding compound to form the inflow cascade comprises introducing the composite molding compound to an inflow compression molding tool comprising a first die with a first plurality of protrusions and a second die with a second plurality of protrusions (operation **1306)** and moving the first die towards the second die to compress the composite molding compound to form the plurality of inflow vanes and the plurality of inflow strongbacks (operation **1308).** In some illustrative examples, moving the first die towards the second die comprises forming the plurality of inflow vanes from the composite molding compound between each of the first plurality of protrusions and each of the second plurality of protrusions, wherein each respective inflow vane of the plurality of inflow vanes is formed between a respective protrusion of the first plurality of protrusions and a respective protrusion of the second plurality of protrusions (operation **1310).**

In some illustrative examples, method **1300** further comprises compression molding the composite molding compound to form the outflow cascade. In some illustrative examples, compression molding the composite molding compound to form the outflow cascade comprises introducing the composite molding compound to an outflow compression molding tool comprising a third die with a third plurality of protrusions and a fourth die with a fourth plurality of protrusions (operation **1314)** and moving the third die towards the fourth die to compress the composite molding compound to form the plurality of outflow vanes and the plurality of outflow strongbacks (operation **1316).** In some illustrative examples, moving the third die towards the fourth die comprises moving the third die towards the fourth die such that each of the plurality of outflow vanes is formed between two respective protrusions of the third plurality of protrusions and between two respective protrusions of the fourth plurality of protrusions (operation **1318).**

In some illustrative examples, method **1300** directs exhaust from a jet engine via the plurality of inflow vanes and the plurality of inflow strongbacks of the inflow cascade towards the outflow cascade (operation **1320).** In some illustrative examples, method **1300** directs exhaust from the inflow cascade via the plurality of outflow vanes and the plurality of outflow strongbacks of the outflow cascade (operation **1322).**

The flowcharts and block diagrams in the different depicted examples illustrate the architecture, functionality, and operation of some possible implementations of apparatus and methods in an illustrative example. In this regard, each block in the flowcharts or block diagrams may represent a module, a segment, a function, and/or a portion of an operation or step.

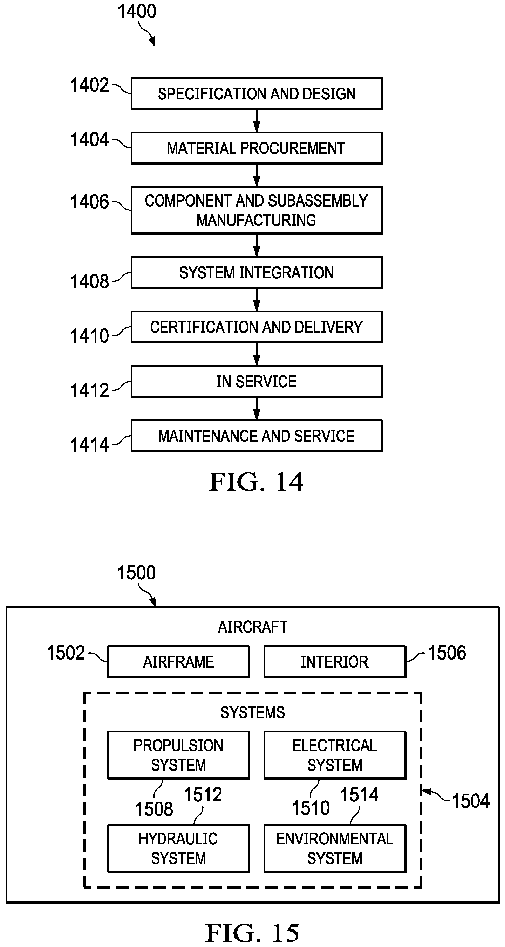

The illustrative examples of the present disclosure may be described in the context of aircraft manufacturing and service method **1400** as shown in **Figure 14** and aircraft **1500** as shown in **Figure 15****.** Turning first to **Figure 14****,** an illustration of an aircraft manufacturing and service method is depicted in accordance with an illustrative example. During pre-production, aircraft manufacturing and service method **1400** may include specification and design **1402** of aircraft **1500** in **Figure 15** and material procurement **1404.**

During production, component and subassembly manufacturing **1406** and system integration **1408** of aircraft **1500** takes place. Thereafter, aircraft **1500** may go through certification and delivery **1410** in order to be placed in service **1412.** While in service **1412** by a customer, aircraft **1500** is scheduled for maintenance and service **1414,** which may include modification, reconfiguration, refurbishment, and other maintenance or service.

Each of the processes of aircraft manufacturing and service method **1400** may be performed or carried out by a system integrator, a third party, and/or an operator. In these examples, the operator may be a customer. For the purposes of this description, a system integrator may include, without limitation, any number of aircraft manufacturers or major-system subcontractors; a third party may include, without limitation, any number of vendors, subcontractors, or suppliers; and an operator may be an airline, a leasing company, a military entity, a service organization, and so on.

With reference now to **Figure 15****,** an illustration of an aircraft is depicted in which an illustrative example may be implemented. In this example, aircraft **1500** is produced by aircraft manufacturing and service method **1400** in **Figure 14** and may include airframe **1502** with a plurality of systems **1504** and interior **1506.** Examples of systems **1504** include one or more of propulsion system **1508,** electrical system **1510,** hydraulic system **1512,** and environmental system **1514.** Any number of other systems may be included. Although an aerospace example is shown, different illustrative examples may be applied to other industries, such as the automotive industry.

Apparatuses and methods embodied herein may be employed during at least one of the stages of aircraft manufacturing and service method **1400.** One or more illustrative examples may be used during component and subassembly manufacturing **1406,** system integration **1408,** or maintenance and service **1414** of **Figure 14****.** For example, inflow compression molding tool **128** and outflow compression molding tool **150** may be used to form cascade assembly **102** of aircraft **1500,** during component and subassembly manufacturing **1406.** As another example, cascade assembly **102** may be a replacement part used to replace a pre-existing cascade assembly during maintenance and service **1414** of **Figure 14****.**

The illustrative examples present a new design for a cascade assembly comprising an inner cascade and an outer cascade. Creating a cascade assembly having two separate cascades enables use of a compression molding process with thermoplastic material. The compression molding process is more efficient than conventional cascade manufacturing. The compression molding process uses less labor than conventional cascade manufacturing for metal or composite cascades. The compression molding process uses less time than conventional cascade manufacturing for metal or composite cascades. The simpler geometry of the presented cascade assemblies will reduce mold complexity and the related cost.

The cascade assembly is formed by combining the two cascades, the inflow cascade and the outflow cascade, which were molded separately. In some illustrative examples, when the inflow and outflow cascades are joined, a finite space is maintained between them. Combining two separate cascades in this manner simplifies the geometry of each cascade and enables use of a much simpler mold. The simpler mold reduces production time and cost while maintaining strength, structure integrity, and performance of the cascade assembly in the thrust reverser within acceptable levels.

The cascade assembly of the illustrative examples comprises a separated inflow cascade and outflow cascade. By presenting two cascades, both cascade pieces have simplified geometry. By presenting a cascade assembly with an inner cascade and an outer cascade, the vanes and strongbacks for each of the inner cascade and the outer cascade would have only straight, parallel surfaces on the outer part and either straight or much simplified geometry on the inner part. The simplified geometry in the inflow cascade and the outflow cascade of the cascade assembly enables compression molding using simple molds with as little as two parts. The simplified molds will result in cost savings from a reduction in production time associated with mold management and setup.

The description of the different illustrative examples has been presented for purposes of illustration and description, and is not intended to be exhaustive or limited to the examples in the form disclosed.

## Claims

1. A cascade assembly (102) for a jet engine (104) thrust reverser (106), the cascade assembly (102) comprising:
an inflow cascade (108) having a plurality of inflow vanes (112), a plurality of inflow strongbacks (114), and a front inflow flange (115);
an outflow cascade (110) having a plurality of outflow vanes (116), a plurality of outflow strongbacks (118), and a front outflow flange (119), wherein each of the plurality of outflow strongbacks (118) are parallel to each other; and
fasteners (122) extending through the front inflow flange (115) and the front outflow flange (119), wherein the inflow cascade (108) and the outflow cascade (110) are separated by a set spacing (120).

2. The cascade assembly (102) of claim 1, wherein the set spacing (120) is up to 25 mm (one inch).

3. The cascade assembly (102) of any preceding claim, wherein the outflow cascade (110) comprises a partial blanking plate (168).

4. The cascade assembly (102) of any preceding claim, wherein each of the plurality of inflow strongbacks (114) are parallel to each other.

5. The cascade assembly (102) of any preceding claim, wherein the inflow cascade (108) is a first unitary composite structure (124) and wherein the outflow cascade (110) is a second unitary composite structure (126).

6. The cascade assembly (102) of claim 5, wherein the inflow cascade (108) and the outflow cascade (110) are each compression molded from thermoplastic material.

7. The cascade assembly (102) of any preceding claim, wherein each of the plurality of inflow vanes (112) are curved, and wherein each of the plurality of outflow vanes (116) are planar.

8. The cascade assembly (102) of any preceding claim, wherein each of the plurality of outflow vanes (116) are parallel (162) to each other.

9. The cascade assembly (102) of any preceding claim, wherein the cascade assembly (102) is one of a plurality of cascade assemblies (170), and wherein each cascade assembly of the plurality of cascade assemblies (170) has a same inflow cascade design.

10. A method (1200) comprising:
positioning (1202) a cascade assembly (102) having an inflow cascade (108) and an outflow cascade (110) relative to a jet engine (104, 200) such that the inflow cascade (108) is closer than the outflow cascade (110) to an axis (210) running through the jet engine (104, 200), wherein the axis (210) runs from an inlet (212) of the jet engine (104, 200) to an exhaust nozzle (214) of the jet engine (104, 200) forming a set spacing (120) between the inflow cascade (108) and the outflow cascade (110); and installing (1203) fasteners (122) through a front inflow flange (115) of the inflow cascade (108) and through a front outflow flange (119) of the outflow cascade (110) to fasten the cascade assembly (102) to the jet engine (104, 200).

11. The method (1200) of claim 10 further comprising:
directing (1204) exhaust (144) from the jet engine (104) via a plurality of inflow vanes (112) and a plurality of inflow strongbacks (114) of the inflow cascade (108) towards the outflow cascade (110); and
directing (1206) exhaust (144) from the inflow cascade (108) via a plurality of outflow vanes (116) and a plurality of outflow strongbacks (118) of the outflow cascade (110), wherein each of the plurality of outflow vanes (116) are parallel to each other, and wherein each of the plurality of outflow strongbacks (118) are parallel to each other.

12. The method (1200) of claim 10 or 11, wherein the inflow cascade (108) is a first unitary composite structure (124), and wherein the outflow cascade (110) is a second unitary composite structure (126).

13. The method (1200) of any one of claims 10-12, wherein the cascade assembly (102) is a first cascade assembly of a plurality of cascade assemblies (170), the method further comprising:
positioning the plurality of cascade assemblies (170, 208) relative to the jet engine (104, 200), each cascade assembly of the plurality of cascade assemblies (170, 208) having a respective inflow cascade and a respective outflow cascade, wherein each inflow cascade of the plurality of cascade assemblies (170, 208) has a same design as the inflow cascade of the first cascade assembly; and
installing fasteners through a respective front inflow flange of each respective inflow cascade and through a respective front outflow flange of each respective outflow cascade to fasten the respective cascade assembly of the plurality of cascade assemblies (170, 208) to the jet engine (104, 200).

14. The method (1300) of claim 10 further comprising:
compression molding (1304) a composite molding compound (130) to form the inflow cascade (108), wherein compression molding the composite molding compound (130) to form the inflow cascade (108) comprises introducing (1306) the composite molding compound (130) to an inflow compression molding tool (128) comprising a first die (132) with a first plurality of protrusions (134) and a second die (136) with a second plurality of protrusions (138), and moving (1308) the first die (132) towards the second die (136) to compress the composite molding compound (130) to form a plurality of inflow vanes (112) and a plurality of inflow strongbacks (114), wherein moving (1310) the first die (132) towards the second die (136) comprises forming the plurality of inflow vanes (112) from the composite molding compound (130) between each of the first plurality of protrusions (134) and each of the second plurality of protrusions (138), wherein each respective inflow vane of the plurality of inflow vanes (112) is formed between a respective protrusion of the first plurality of protrusions (134) and a respective protrusion of the second plurality of protrusions (138).

15. The method (1300) of claim 10 further comprising:
compression molding (1312) a composite molding compound (130) to form the outflow cascade (110), wherein compression molding the composite molding compound (130) to form the outflow cascade (110) comprises introducing (1314) the composite molding compound (130) to an outflow compression molding tool (150) comprising a third die (152) with a third plurality of protrusions (154) and a fourth die (156) with a fourth plurality of protrusions (158), and moving (1316) the third die (152) towards the fourth die (156) to compress the composite molding compound (130) to form a plurality of outflow vanes (116) and a plurality of outflow strongbacks (118), wherein moving (1318) the third die (152) towards the fourth die (156) comprises moving the third die (152) towards the fourth die (156) such that each of the plurality of outflow vanes (116) is formed between two respective protrusions of the third plurality of protrusions (154) and between two respective protrusions of the fourth plurality of protrusions (158).

## Patentansprüche

1. Kaskadenanordnung (102) für einen Schubumkehrer (106) eines Strahltriebwerks (104), wobei die Kaskadenanordnung (102) Folgendes umfasst:
eine Einströmkaskade (108) mit einer Vielzahl von Einströmschaufeln (112), einer Vielzahl von Einströmbacken (114) und einem vorderen Einströmflansch (115);
eine Ausströmkaskade (110) mit einer Vielzahl von Ausströmschaufeln (116), einer Vielzahl von Ausströmbacken (118) und einem vorderen Ausströmflansch (119), wobei die Vielzahl von Ausströmbacken (118) jeweils parallel zueinander sind; und
sich durch den vorderen Einströmflansch (115) und den vorderen Ausströmflansch (119) erstreckende Befestigungselemente (122), wobei die Einströmkaskade (108) und die Ausströmkaskade (110) durch einen festgelegten Abstand (120) getrennt sind.

2. Kaskadenanordnung (102) nach Anspruch 1, wobei der festgelegte Abstand (120) bis zu 25 mm (ein Zoll) beträgt.

3. Kaskadenanordnung (102) nach einem der vorhergehenden Ansprüche, wobei die Ausströmkaskade (110) eine teilweise Blindplatte (168) umfasst.

4. Kaskadenanordnung (102) nach einem der vorhergehenden Ansprüche, wobei die Vielzahl von Einströmbacken (114) jeweils parallel zueinander sind.

5. Kaskadenanordnung (102) nach einem der vorhergehenden Ansprüche, wobei die Einströmkaskade (108) eine erste einheitliche Verbundstruktur (124) ist und wobei die Ausströmkaskade (110) eine zweite einheitliche Verbundstruktur (126) ist.

6. Kaskadenanordnung (102) nach Anspruch 5, wobei die Einströmkaskade (108) und die Ausströmkaskade (110) jeweils aus thermoplastischem Material formgepresst sind.

7. Kaskadenanordnung (102) nach einem der vorhergehenden Ansprüche, wobei jede aus der Vielzahl von Einströmschaufeln (112) gekrümmt ist und wobei jede aus der Vielzahl von Ausströmschaufeln (116) eben ist.

8. Kaskadenanordnung (102) nach einem der vorhergehenden Ansprüche, wobei die Vielzahl von Ausströmschaufeln (116) jeweils parallel (162) zueinander sind.

9. Kaskadenanordnung (102) nach einem der vorhergehenden Ansprüche, wobei die Kaskadenanordnung (102) eine aus einer Vielzahl von Kaskadenanordnungen (170), ist und wobei jede Kaskadenanordnung aus der Vielzahl von Kaskadenanordnungen (170) dieselbe Einströmkaskadenkonstruktion aufweist.

10. Verfahren (1200), das Folgendes umfasst:
Positionieren (1202) einer Kaskadenanordnung (102) mit einer Einströmkaskade (108) und einer Ausströmkaskade (110) relativ zu einem Strahltriebwerk (104, 200), so dass die Einströmkaskade (108) näher an einer durch das Strahltriebwerk (104, 200) verlaufenden Achse (210) als die Ausströmkaskade (110) ist, wobei die Achse (210) von einem Einlass (212) des Strahltriebwerks (104, 200) zu einer Auslassdüse (214) des Strahltriebwerks (104, 200) verläuft und einen festgelegten Abstand (120) zwischen der Einströmkaskade (108) und der Ausströmkaskade (110) bildet; und Anbringen (1203) von Befestigungselementen (122) durch einen vorderen Einströmflansch (115) der Einströmkaskade (108) und durch einen vorderen Ausströmflansch (119) der Ausströmkaskade (110), um die Kaskadenanordnung (102) an dem Strahltriebwerk (104, 200) zu befestigen.

11. Verfahren (1200) nach Anspruch 10, wobei das Verfahren weiterhin Folgendes umfasst:
Leiten (1204) von Abgas (144) aus dem Strahltriebwerk (104) über eine Vielzahl von Einströmschaufeln (112) und eine Vielzahl von Einströmbacken (114) der Einströmkaskade (108) zu der Ausströmkaskade (110); und
Leiten (1206) von Abgas (144) aus der Einströmkaskade (108) über eine Vielzahl von Ausströmschaufeln (116) und eine Vielzahl von Ausströmbacken (118) der Ausströmkaskade (110), wobei die Vielzahl von Ausströmschaufeln (116) jeweils parallel zueinander sind und wobei die Vielzahl von Ausströmbacken (118) jeweils parallel zueinander sind.

12. Verfahren (1200) nach Anspruch 10 oder 11, wobei die Einströmkaskade (108) eine erste einheitliche Verbundstruktur (124) ist, und wobei die Ausströmkaskade (110) eine zweite einheitliche Verbundstruktur (126) ist.

13. Verfahren (1200) nach einem der Ansprüche 10 bis 12, wobei die Kaskadenanordnung (102) eine erste Kaskadenanordnung aus einer Vielzahl von Kaskadenanordnungen (170) ist, wobei das Verfahren ferner Folgendes umfasst:
Positionieren der Vielzahl von Kaskadenanordnungen (170, 208) relativ zu dem Strahltriebwerk (104, 200), wobei jede Kaskadenanordnung aus der Vielzahl von Kaskadenanordnungen (170, 208) jeweils eine Einströmkaskade und eine Ausströmkaskade aufweist, wobei jede Kaskadenanordnung aus der Vielzahl von Kaskadenanordnungen (170, 208) dieselbe Konstruktion wie die Einströmkaskade der ersten Kaskadenanordnung aufweist; und
Anbringen von Befestigungselementen durch einen jeweiligen vorderen Einströmflansch jeder jeweiligen Einströmkaskade und durch einen jeweiligen vorderen Ausströmflansch jeder jeweiligen Ausströmkaskade, um die jeweilige Kaskadenanordnung aus der Vielzahl von Kaskadenanordnungen (170, 208) an dem Strahltriebwerk (104, 200) zu befestigen.

14. Verfahren (1300) nach Anspruch 10, wobei das Verfahren weiterhin Folgendes umfasst:
Formpressen (1304) einer Verbundformmasse (130) zur Bildung der Einströmkaskade (108), wobei das Formpressen der Verbundformmasse (130) zur Bildung der Einströmkaskade (108) Folgendes umfasst: Einbringen (1306) der Verbundformmasse (130) in ein Einström-Formpresswerkzeug (128) umfassend eine erste Matrize (132) mit einer ersten Vielzahl von Vorsprüngen (134) und eine zweite Matrize (136) mit einer zweiten Vielzahl von Vorsprüngen (138), und Bewegen (1308) der ersten Matrize (132) zu der zweiten Matrize (136), um die Verbundformmasse (130) zu komprimieren, um eine Vielzahl von Einströmschaufeln (112) und
eine Vielzahl von Einströmbacken (114) zu formen, wobei das Bewegen (1310) der ersten Matrize (132) zu der zweiten Matrize (136) das Bilden der Vielzahl von Einströmschaufeln (112) aus der Verbundformmasse (130) zwischen jedem aus der ersten Vielzahl von Vorsprüngen (134) und
jedem aus der zweiten Vielzahl von Vorsprüngen (138) umfasst, wobei jede jeweilige Einströmschaufel aus der Vielzahl von Einströmschaufeln (112) zwischen einem jeweiligen Vorsprung aus der ersten Vielzahl von Vorsprüngen (134) und einem jeweiligen Vorsprung aus der zweiten Vielzahl von Vorsprüngen (138) geformt wird.

15. Verfahren (1300) nach Anspruch 10, wobei das Verfahren weiterhin Folgendes umfasst:
Formpressen (1312) einer Verbundformmasse (130) zur Bildung der Ausströmkaskade (110), wobei das Formpressen der Verbundformmasse (130) zur Bildung der Ausströmkaskade (110) Folgendes umfasst: Einbringen (1314) der Verbundformmasse (130) in ein Ausström-Formpresswerkzeug (150) umfassend eine dritte Matrize (152) mit einer dritten Vielzahl von Vorsprüngen (154) und eine vierte Matrize (156) mit einer vierten Vielzahl von Vorsprüngen (158), und Bewegen (1316) der dritten Matrize (152) zu der vierten Matrize (156), um die Verbundformmasse (130) zu komprimieren, um eine Vielzahl von Ausströmschaufeln (116) und eine Vielzahl von Ausströmbacken (118) zu formen, wobei das Bewegen (1318) der dritten Matrize (152) zu der vierten Matrize (156) das Bewegen der dritten Matrize (152) derart zu der vierten Matrize (156) umfasst, dass jede aus der Vielzahl von Ausströmschaufeln (116) zwischen zwei jeweiligen Vorsprüngen aus der dritten Vielzahl von Vorsprüngen (154) und zwischen zwei jeweiligen Vorsprüngen aus der vierten Vielzahl von Vorsprüngen (158) geformt wird.

## Revendications

1. Ensemble formant grille (102) pour un inverseur de poussée (106) d'un réacteur (104), l'ensemble formant grille (102) comprenant :
une grille d'entrée (108) possédant une pluralité d'aubes d'entrée (112), une pluralité de plaques de renfort d'entrée (114) et une bride d'entrée avant (115);
une grille de sortie (110) possédant une pluralité d'aubes de sortie (116), une pluralité de plaques de renfort de sortie (118) et une bride de sortie avant (119), la pluralité de plaques de renfort de sortie (118) étant agencées parallèles entre elles ; et
des moyens de fixation (122) traversant la bride d'entrée avant (115) et la bride de sortie avant (119), lesdites grille d'entrée (108) et grille de sortie (110) étant séparées par un espacement fixe (120).

2. Ensemble formant grille (102) selon la revendication 1, dans lequel l'espacement fixe (120) mesure jusqu'à 25 mm (un pouce).

3. Ensemble formant grille (102) selon l'une quelconque des revendications précédentes, dans lequel la grille de sortie (110) comprend une plaque d'obturation partielle (168).

4. Ensemble formant grille (102) selon l'une quelconque des revendications précédentes, dans lequel la pluralité de plaques de renfort d'entrée (114) sont agencées parallèles entre elles.

5. Ensemble formant grille (102) selon l'une quelconque des revendications précédentes, dans lequel la grille d'entrée (108) constitue une première structure composite unitaire (124) et dans lequel la grille de sortie (110) constitue une deuxième structure composite unitaire (126).

6. Ensemble formant grille (102) selon la revendication 5, dans lequel la grille d'entrée (108) et la grille de sortie (110) sont chacune moulées par compression à partir d'un matériau thermoplastique.

7. Ensemble formant grille (102) selon l'une quelconque des revendications précédentes, dans lequel chacune des aubes de la pluralité d'aubes d'entrée (112) est incurvée, et dans lequel chacune des aubes de la pluralité d'aubes de sortie (116) est plane.

8. Ensemble formant grille (102) selon l'une quelconque des revendications précédentes, dans lequel la pluralité d'aubes de sortie (116) sont agencées parallèles (162) entre elles.

9. Ensemble formant grille (102) selon l'une quelconque des revendications précédentes, dans lequel l'ensemble formant grille (102) est un ensemble parmi une pluralité d'ensembles formant grille (170), et dans lequel chaque ensemble formant grille de la pluralité d'ensembles formant grille (170) est de conception identique concernant sa grille d'entrée.

10. Procédé (1200) comprenant :
la disposition (1202) d'un ensemble formant grille (102) possédant une grille d'entrée (108) et une grille de sortie (110) par rapport à un réacteur (104, 200) de telle façon que la grille d'entrée (108) soit plus proche que la grille de sortie (110) d'un axe (210) traversant le réacteur (104, 200), l'axe (210) partant d'une entrée (212) du réacteur (104, 200) jusqu'à une tuyère (214) du réacteur (104, 200) en formant un espacement fixe (120) entre la grille d'entrée (108) et la grille de sortie (110) ;
et l'installation (1203) de moyens de fixation (122) dans une bride d'entrée avant (115) de la grille d'entrée (108) et une bride de sortie avant (119) de la grille de sortie (110) afin de fixer l'ensemble formant grille (102) au réacteur (104, 200).

11. Procédé (1200) selon la revendication 10, comprenant en outre :
le guidage (1204) de l'échappement (144) du réacteur (104) par le bais d'une pluralité d'aubes d'entrée (112) et d'une pluralité de plaques de renfort d'entrée (114) de la grille d'entrée (108) vers la grille de sortie (110) ; et
le guidage (1206) de l'échappement (144) de la grille d'entrée (108) par le bais d'une pluralité d'aubes de sortie (116) et d'une pluralité de plaques de renfort de sortie (118) de la grille de sortie (110), les aubes de la pluralité d'aubes de sortie (116) étant agencées parallèles entre elles, et la pluralité de plaques de renfort de sortie (118) étant agencées parallèles entre elles.

12. Procédé (1200) selon la revendication 10 ou 11, dans lequel la grille d'entrée (108) constitue une première structure composite unitaire (124), et dans lequel la grille de sortie (110) constitue une deuxième structure composite unitaire (126).

13. Procédé (1200) selon l'une quelconque des revendications 10 à 12, dans lequel l'ensemble formant grille (102) constitue un premier ensemble formant grille d'une pluralité d'ensembles formant grille (170), le procédé comprenant en outre :
la disposition de la pluralité d'ensembles formant grille (170, 208) par rapport au réacteur (104, 200), chaque ensemble formant grille de la pluralité d'ensembles formant grille (170, 208) possédant une grille d'entrée respective et une grille de sortie respective, chaque grille d'entrée de la pluralité d'ensembles formant grille (170, 208) ayant une conception identique à celle de la grille d'entrée du premier ensemble formant grille ; et
l'installation de moyens de fixation dans une bride d'entrée avant respective de chaque grille d'entrée respective et dans une bride de sortie avant respective de chaque grille de sortie respective pour fixer l'ensemble formant grille respectif de la pluralité d'ensembles formant grille (170, 208) au réacteur (104, 200).

14. Procédé (1300) selon la revendication 10, comprenant en outre :
le moulage par compression (1304) d'un composé de moulage composite (130) pour former la grille d'entrée (108), ledit moulage par compression du composé de moulage composite (130) pour former la grille d'entrée (108) comprenant l'introduction (1306) du composé de moulage composite (130) dans un outil de moulage par compression d'entrée (128) comprenant une première matrice (132) présentant une première pluralité de saillies (134) et une deuxième matrice (136) présentant une deuxième pluralité de saillies (138), et le déplacement (1308) de la première matrice (132) vers la deuxième matrice (136) afin de comprimer le composé de moulage composite (130) pour former une pluralité d'aubes d'entrée (112) et une pluralité de plaques de renfort d'entrée (114), ledit déplacement (1310) de la première matrice (132) vers la deuxième matrice (136) comprenant la formation de la pluralité d'aubes d'entrée (112) à partir du composé de moulage composite (130) entre chacune des saillies de la première pluralité de saillies (134) et
chacune des saillies de la deuxième pluralité de saillies (138), chaque aube d'entrée respective de la pluralité d'aubes d'entrée (112) étant formée entre une saillie respective de la première pluralité de saillies (134) et une saillie respective de la deuxième pluralité de saillies (138).

15. Procédé (1300) selon la revendication 10, comprenant en outre :
le moulage par compression (1312) d'un composé de moulage composite (130) pour former la grille de sortie (110), ledit moulage par compression du composé de moulage composite (130) pour former la grille de sortie (110) comprenant l'introduction (1314) du composé de moulage composite (130) dans un outil de moulage par compression de sortie (150) comprenant une troisième matrice (152) présentant une troisième pluralité de saillies (154) et une quatrième matrice (156) présentant une quatrième pluralité de saillies (158), et le déplacement (1316) de la troisième matrice (152) vers la quatrième matrice (156) afin de comprimer le composé de moulage composite (130) pour former une pluralité d'aubes de sortie (116) et une pluralité de plaques de renfort de sortie (118), ledit déplacement (1318) de la troisième matrice (152) vers la quatrième matrice (156) comprenant le déplacement de la troisième matrice (152) vers la quatrième matrice (156) de telle façon que chacune des aubes de la pluralité d'aubes de sortie (116) soit formée entre deux saillies respectives de la troisième pluralité de saillies (154) et entre deux saillies respectives de la quatrième pluralité de saillies (158).
